# EUROPEAN PATENT SPECIFICATION

(11) **EP 4 106 588 B1**
(45) Date of publication and mention of the grant of the patent: **09.04.2025**
(21) Application number: 21756907.8
(22) Date of filing: 19.02.2021
(51) Int. Cl.: A47J 37/12, A23L 19/18, G01F 23/00, A23L 5/10

(54) **MULTI-ZONE FRYER AND METHOD OF MULTI-ZONE FRYING**
MEHRZONIGE FRITEUSE UND VERFAHREN ZUM MEHRZONIGEN FRITIEREN
FRITEUSE À ZONES MULTIPLES ET PROCÉDÉ DE FRITURE À ZONES MULTIPLES

(30) Priority: 20.02.2020 SE 2050192
(43) Date of publication of application: 28.12.2022
(73) Proprietor: Rosenqvists Food Technologies AB, 291 54 Kristianstad (SE)
(72) Inventor: KALLING, Magnus, 291 69 Fjälkinge (SE)
(74) Representative: Ström & Gulliksson AB
(86) International application number: PCT/SE2021/050141
(87) International publication number: WO 2021/167522

(56) References cited:
- WO-A1-2016/094323
- US-A- 6 057 772
- US-A1- 2013 098 847
- US-A1- 2014 345 477
- US-A9- 2017 295 996

## Description

### THECHNICAL FIELD

The present invention generally relates to a fryer for preparation of foodstuff and method of operating a fryer, and more particular to a multi-zone fryer with a conveyor and adaptive frying control, and a method of operating the multi-zone fryer with a conveyor and adaptive frying control.

### BACKGROUND

Deep-fryers for food products typically has an elongate deep-frying trough filled with heated oil. A conveyor or other type of mechanism is used to convey food through the heated oil in the trough and then remove the food from the tank.

WO2016094323 discloses a dual purpose fryer for continuous preparation of fried products. The dual purpose fryer includes an elongated cooking trough configured to hold a volume of cooking oil and including a plurality of fluid connected cooking zones. The temperature of the cooking oil within each cooking zone is established by controlling a flow rate of hot cooking oil into the cooking zone through a hot oil fryer inlet and a flow rate of cool cooking oil from the cooking zones through a cool oil fryer outlet. The temperature of the cooking oil within each of the cooking zones collectively establishes a thermal profile across the elongated cooking trough.

EP1225825 describes a deep-fryer comprising an elongate deep-frying trough and an endless conveyor belt, which is arranged to travel along a carrying run along the bottom of the deep-frying trough from an inlet end to an outlet end thereof, and to travel along a return run from the outlet end back to the inlet end. As the food travels through the tank, it is cooked by the heated oil. A driven deflecting roller at the outlet end and a deflecting roller at the inlet end are adapted to drivingly engage the conveyor belt. A driving motor is arranged for driving the two deflecting rollers.

The increasing demand for processing greater volumes of food products has caused formation of parallel frying process lines as well as increased size of frying process lines. However, parallel food process systems or lines involves increased costs due to duplication of deep-fryers and the various components and equipment including conveyor belts, rollers, driving motors, control systems and circuits, and the amount of cooking oil to be used etc. A large-scale food process line based on a single deep-fryer requires an extended conveyor arrangement including either one single extended conveyor, such as a conveyor belt, or a plurality of conveyors/conveyor belts arranged in series.

US 2014/0373730 describes a fryer and methods of frying food products, such as sweet potato or other potato products. The fryer can comprise one or more frying areas that contain oil within an oil receiving area. An infeed conveyor can be positioned at an inlet for directing products into the fryer. At least one internal conveyor can carry product received from infeed conveyor through the oil receiving area and direct the product towards outlet and out of fryer. The fryer may comprise a plurality of frying sections within a frying chamber. A first frying section comprises a first conveyor. Frying chamber is divided by a wall member, which separates the first frying section from a second frying section having a second conveyor. Thus, the wall member separates the oil receiving area into two separate reservoirs. First and second frying sections can be generally the same in terms of size and operation. Hence, duplication of conveyor belts, rollers, driving motors, control systems and circuits, and the amount of cooking oil to be used etc increase cost and complexity.

US4913042 describes a conventional deep fat frying apparatus comprising an oil circulation system, which has a heated bath of cooking oil carried in a reservoir through which food products are carried on a conveyor means for cooking or frying said products. The oil circulation system generates a flow of cooking oil that moves through the oil bath in a direction transverse to the movement of the food product and which is intended to provide substantially equal temperature throughout the oil bath. An arrangement of a pump to pump oil out of the reservoir below a particular oil level through outlet pipes, then through pump further through conduit and inlet pipes entering the reservoir above the particular oil level. Oil is drawn from a spacing through holes to establish a "counter balancing" oil flow. Thereby, the temperature of the oil in the reservoir is to be the same measured across the width of the reservoir. Also, the volume and velocity of the "counter balancing" oil flow is adjustable to substantially nullify the effect of the transverse oil flows. However, the arrangement of establishing the "counter balancing" oil flow requires a large reservoir and a corresponding increased volume of cooking oil. Hence, an increased volume of cooking oil to be heated causes increased energy consumption.

When preparation starts and the product enters the conveyor belt, the oil level rises due to the displaced oil volume of the product. As a result, the oil level becomes too high and the product begins to float around and touch each other. This results in white contact surfaces not being deep-fried.

Since the conveyor belt and products, e.g shaped potato products to be fried singularly, move the oil through the reservoir at different speeds depending on the frying time, the level profile will change. If the oil level is too high, the product will rise from the conveyor belt. If the oil level is too low, products will not be deep-fried.

### SUMMARY

It is an object of the teachings of this application to obviate at least some of the disadvantages discussed above.

The invention is defined by the appended claims.

In accordance with a first aspect of the present disclosure, a multi-zone fryer for preparation of fried food products is provided, comprising an elongated cooking trough for holding a volume of heated cooking oil, at least first and second rollers, and a conveyor arranged to extend and transport the food products in a direction from the first roller at an inlet end, along the bottom of the trough to the second roller at an outlet end, wherein the elongated cooking trough comprises at least a first and second cooking zone, each cooking zone has at least two oil level sensors, including a first oil level sensor and a second oil level sensor, wherein the first oil level sensor is arranged at the beginning of the cooking zone and the second oil level sensor is arranged at the end of the cooking zone, wherein a cooking process control device is configured to receive input signals from the oil level sensors and to control an oil inlet control valve and an oil outlet control valve of each cooking zone arranged in fluid connection with the trough and an oil circulation system to ensure that a predetermined oil level is kept in the trough.

In some embodiments of the multi-zone fryer, the oil level sensors in each zone are configured to co-operate and control the oil inlet control valve and the oil outlet control valve within said each zone to ensure that a predetermined oil level is kept at the same level in the different zones in the trough.

In some embodiments of the multi-zone fryer, the oil level sensors in different zones are be configured to co-operate and, by means of the cooking process control device, control the oil inlet control valves and the oil outlet control valves of the different zones to ensure that a predetermined oil level is kept at the same level in the different zones in the trough.

In some embodiments of the multi-zone fryer, each cooking zone comprises an oil inlet, an oil outlet, having an intermediate part of the cooking trough extending between said oil inlet and oil outlet.

In some embodiments, the cooking zones are in fluid connection, a first oil level sensor arranged at the beginning of the first cooking zone after and in proximity to a first oil inlet in said direction, a second oil level sensor arranged at the end of the first cooking zone before a first oil outlet, a third oil level sensor arranged at the beginning of the second cooking zone after and in proximity to ta second oil inlet, and a fourth oil level sensor arranged at the end of the second cooking zone and before a second oil outlet, each oil inlet is connected to an oil inlet circuit via an oil inlet control valve and each oil outlet is connected to an oil outlet circuit via an oil outlet control valve, wherein the first oil level sensor is configured to detect the oil level of the cooking oil in the trough near the first oil inlet and to control the first oil inlet control valve o regulate the flow of oil from the oil inlet circuit into the trough, the second oil level sensor is configured to detect the oil level near the first oil outlet and to control the first oil outlet control valve to control the flow of oil from the trough through to the first oil outlet to the oil outlet circuit, and
the third oil level sensor is configured to detect the oil level of the cooking oil in the trough near the second oil inlet and to control the second oil inlet control valve to regulate the flow of oil from the oil inlet circuit into the trough, the fourth oil level sensor is configured to detect the oil level near the second oil outlet and to control the second oil outlet control valve to control the flow of oil from the trough through the second oil outlet to the oil outlet circuit until the predetermined cooking oil level is obtained in the through.

In some embodiments of the multi-zone fryer, the multi-zone fryer comprises three, four, five or more cooking zones, arranged in fluid connection with each other along the length of the trough.

In some embodiments of the multi-zone fryer, the oil level sensors in a particular zone are configured to co-operate and control the oil inlet control valve and the oil outlet control valve of said particular zone to ensure that a predetermined oil level is kept in the trough.

In some embodiments of the multi-zone fryer, the oil level sensors and the corresponding inlet and outlet valves are configured to co-operate in pairs, crosswise, or together to provide the predetermined oil level.

In some embodiments of the multi-zone fryer, the oil level sensors and the corresponding inlet and outlet valves are configured to provide the oil level in the trough at least at the height of the particular product on the conveyor belt, when the product is moved through every cooking zone along a horizontal main portion of the run to achieve a uniform deep-frying of the entire product.

In some embodiments of the multi-zone fryer, the oil inlet comprises a labyrinth forming a fluid connection from the oil inlet circuit to the cooking trough.

In some embodiments of the multi-zone fryer, wherein the oil inlet includes an inlet trough extending laterally along the width of the bottom of the cooking trough, wherein the sectional area of the inlet trough is rectangular, an angle plate facing a bottom corner forming a small first chamber in the far end of the inlet trough, and a main chamber, wherein the top part of the angle plate has plurality of holes providing a fluid connection from the oil inlet circuit into the main chamber of the inlet trough, an inclined plate arranged in the main chamber extending from the bottom diagonally to a perforated outlet plate of the main chamber forming a first and second chamber, wherein the inclined plate extends along the width of the inlet trough with a narrow gap along the bottom forming a fluid connection between the sub chambers, and the perforated outlet plate is provided with a pattern of lip shaped holes arranged to feed cooking oil into the trough in the same direction as the movement of the food products on the conveyor.

In some embodiments, the multi-zone fryer comprises a circulation pump configured to pump the cooking oil into the trough to provide a flowrate of the cooking oil individually in each zone to be equal or essentially equal to the speed of the conveyor belt in order to prevent turbulence.

In accordance with a second aspect of the present disclosure, a method for preparation of fried foodstuff in a multi-zone fryer is provided, comprising:
providing food products on the conveyor for transportation through the heated cooking oil to be fried, wherein the cooking oil level rises due to the displaced oil volume of the product;
detecting the rise of the oil level by the first oil level sensor in the first cooking zone;
controlling the first oil inlet control valve to regulate the flow of oil to be reduced from the oil inlet circuit into the trough through the first oil inlet in response to the detected cooking oil level;
detecting the rise of the oil level by the second oil level sensor;
controlling the first outlet control valve to regulate the flow of oil from the trough through the first outlet;
detecting the oil level by the third oil level sensor in the second cooking zone,
controlling the another oil inlet control valve to regulate the flow of oil from the oil inlet circuit into the trough through the second oil inlet in response to the detected oil level;
detecting the oil level by the fourth oil level sensor;
controlling the another outlet control valve to regulate the flow of oil from the trough through the second outlet
to ensure that a predetermined oil level is kept in the trough.

In some embodiments, the predetermined oil level in the trough is regulated to be at a level between 5-100 mm.

In some embodiments, the predetermined oil level in the trough is regulated to be at a level between 10-35 mm.

Advantageously, the oil level in the trough is regulated to be at a level just to cover the food products on the conveyor belt.

In accordance with a third aspect of the present disclosure, a computer program comprising program instructions for causing a cooking process control device having computer capability to perform a method for preparation of fried foodstuff in a multi fryer according to the second aspect is provided.

In one embodiment, there is provided a computer program on a carrier and comprising computer executable instructions for causing a computer to perform the method according to the second aspect, when said program is run on a computer.

In one embodiment, there carrier is a record medium, computer memory, read-only memory, computer-readable medium or an electrical carrier signal.

Other aspects and features of the invention and its embodiments are defined by the appended patent claims and are further explained, together with problems solved and advantages obtained, in the detailed description section as well as in the drawings.

It should be emphasized that the term "comprises/comprising" when used in this specification is taken to specify the presence of stated features, integers, steps, or components, but does not preclude the presence or addition of one or more other features, integers, steps, components, or groups thereof.

All terms used in the claims are to be interpreted according to their ordinary meaning in the technical field, unless explicitly defined otherwise herein. All references to "a/an/the [element, device, component, means, step, etc are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

Exemplary embodiments is illustrated by way of example in the accompanying drawings in which like reference numbers indicate the same or similar elements
and in which:
FIG. 1 is a cross-sectional view of a multi-zone fryer according to a first embodiment;
FIG. 1A is a perspective view of a portion of the multi-zone fryer shown in FIG. 1 including synchronized dual drive of a conveyor belt;
FIG. 2 is a perspective view of a portion of the multi-zone fryer shown in FIG. 1;
FIG. 3 is a close-up perspective view of a portion of the multi-zone fryer shown in FIG. 2;
FIG. 4 is a close-up cross-sectional view of a portion of the multi-zone fryer shown in FIG. 1;
FIG. 5 is a close-up cross-sectional view of a portion of the multi-zone fryer shown in FIG. 4;
FIG. 6A is a close-up cross-sectional view of a portion of the multi-zone fryer shown in FIG. 1;
FIG. 6B is a close-up perspective view of a portion of the multi-zone fryer shown in FIG. 1;
FIG. 7 is a schematic block diagram of a control system for running the operation of the multi-zone fryer in FIG. 1; and
FIG. 8 is a flowchart of a method for frying food products using a multi-zone fryer as shown on FIG. 1

### DESCRIPTION OF EMBODIMENTS

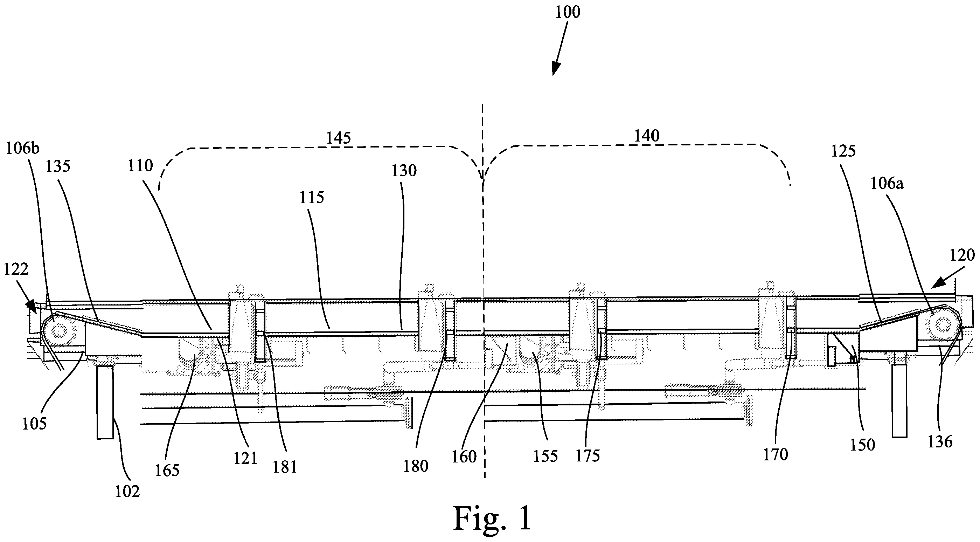

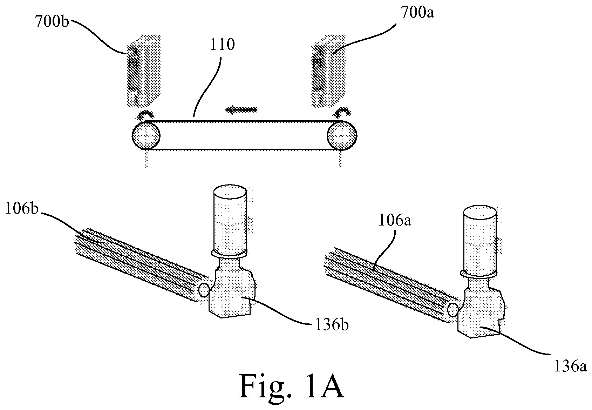

Embodiments of the invention will be described with reference to FIGs 1-8.

Reference will now be made to the figures to describe the embodiments in detail. The same reference signs are used for corresponding features in different figures.

Reference is made to FIG. 1, which is a multi-zone fryer 100 or deep-fryer for preparation of fried or deep-fried food products such as, but not limited to, potato cakes or croquettes in accordance with a first embodiment. The multi-zone fryer 100 comprises a frame 102 supporting an elongated cooking trough or vessel 105, at least first and second rollers 106a, 106b, and a conveyor, for example a conveyor belt 110. The trough 105 may hold a volume of heated cooking oil 115 up to a desired level. The conveyor belt 110 is arranged to extend from the first roller 106a, which is arranged at an inlet end 120 of the multi-zone fryer 100, along the bottom 121 of the trough to the second roller 106b, which is arranged at an outlet end 122 of the multi-zone fryer 100. The conveyor belt 110 and the rollers 106a, 106b forming a run comprising a first inclined portion 125 from the first roller 106a at the inlet end 120 down to the bottom 121, a horizontal main portion 130, and a second inclined portion 135 from the bottom 121 up to the second roller 106b at the outlet end 122. The rollers 106a, 106b and the conveyor belt 110 may be driven by at least one electric drive motor or any other drive.

The elongated cooking trough 105 of the multi-zone fryer 100 may further comprise a plurality of cooking zones. In the embodiment, the cooking trough 105 comprises, but is not limited to, two cooking zones, i.e a first cooking zone 140 and a second cooking zone 145. Each cooking zone may comprise an oil inlet, an oil outlet, and the intermediate part of the cooking trough 105 extending between said oil inlet and oil outlet. In this embodiment of the multi-zone fryer 100, the first cooking zone 140 comprises a first oil inlet 150 and a first oil outlet 155, and the second cooking zone 145 comprises a second oil inlet 160 and a second oil outlet 165.

In some embodiments, the multi-zone fryer may comprise 3, 4, 5 or more zones, each zone including an oil inlet, an oil outlet, and an intermediate part of the cooking trough. Although, the trough is divided in two or more cooking zones, the cooking zones are all in fluid connection with each other. Therefore, cooking oil may flow from one cooking zone to another along the length of the trough 105. The multi-zone fryer 100 with oil inlets and oil outlets are arranged to provide a flow of the cooking oil preferably in the same direction as the direction of the conveyor belt 110, i.e in the direction from the first cooking zone 140 to the second cooking zone 145.

Each zone comprises at least two oil level sensors. In this embodiment of the multi-zone fryer, a first oil level sensor 170 is arranged at the beginning of the first cooking zone 140 after and in proximity to the first oil inlet 150 in the direction of the oil flow from the inlet 120 to the outlet 122. A second oil level sensor 175 is arranged at the end of the first cooking zone 140 before the first oil outlet 155 in the direction of the oil flow. Similarly, a third oil level sensor 180 is arranged at the beginning of the second cooking zone 145 after and in proximity to the second oil inlet 160 in the direction of the oil flow. A fourth oil level sensor 181 is arranged at the end of the second cooking zone 145 and before the second oil outlet 165 in the direction of the oil flow.

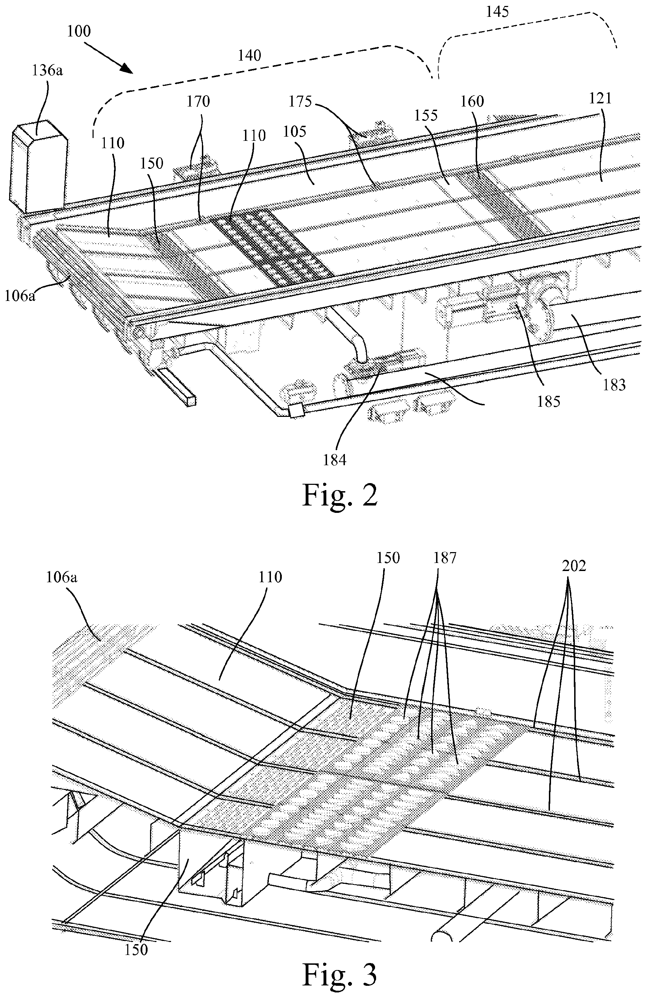

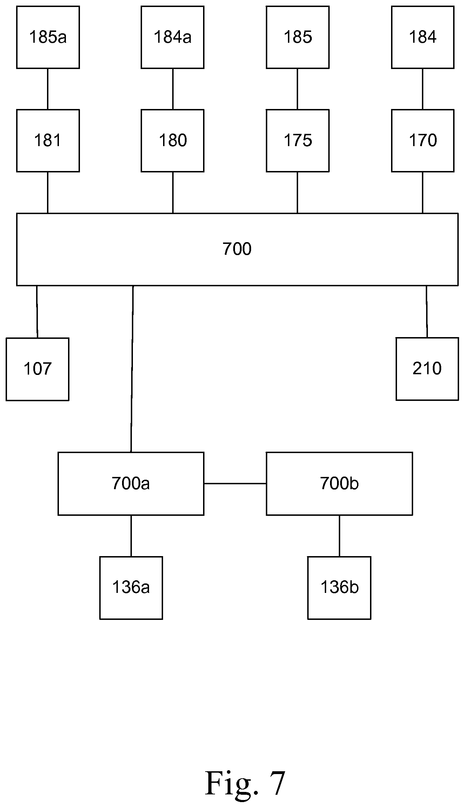

Reference is made to FIG. 2, which is a perspective view of a portion of the multi-zone fryer 100 in FIG. 1. The oil inlets 150, 160 are configured to provide heated cooking oil to the cooking trough 105 from a cooking oil circulation system. The cooking oil circulation system comprises an oil inlet circuit 182 with pipes and an oil outlet circuit 183 with pipes connected to a heat exchanger 210 (illustrated in FIG. 7) for heating the cooking oil, i.e vegetable oil, outside the cooking trough 105. Heated cooking oil is fed to the cooking trough 105 by a circulation pump 107 (illustrated in FIG. 7) of the oil circulation system via the oil inlet circuit 182 through the first oil inlet 150 of the first cooking zone 140 and the second oil inlet 160 of the first cooking zone 145. Oil is removed from the trough 105 through the first oil outlet 155 in the first zone 140 and the second oil outlet in the second zone 145. As illustrated in FIG. 2, the oil outlet 150 and oil inlet 160 extend laterally along the width of the bottom of the cooking trough 105.

Each oil inlet is connected to the oil inlet circuit via an oil inlet control valve and each oil outlet is connected to the oil outlet circuit via an oil outlet control valve. The first oil inlet 155 in the first zone is connected to the oil inlet circuit 182 via a first oil inlet control valve 184, and the first oil outlet 155 is connected to the oil outlet circuit 183 via a first oil outlet control valve 185.

As illustrated tin FIG. 2, the first oil level sensor 170 is configured to detect the oil level of the cooking oil in the trough 105 near the first oil inlet 150 and to control the first oil inlet control valve 184 to regulate the flow of oil from the oil inlet circuit 182 into the trough 105 through the first oil inlet 150. The second oil level sensor 175 is configured to detect the oil near the first oil outlet 155 and to control the first oil outlet control valve 185 to control the flow of oil from the trough 105 through the first oil outlet 155 to the oil outlet circuit 183.

Therefore, the multi-zone fryer 100 is configured to provide the oil level in the trough at least at the height of the particular food product on the conveyor belt, when the product is moved through every cooking zone 140, 145 along the horizontal main portion 130 of the run. Thereby, the heated cooking oil 115 covers the food product during the cooking to achieve a uniform deep-frying of the entire product.

Since the conveyor belt and food products, e.g shaped potato products to be fried singularly, move the oil through the reservoir at different speeds depending on the frying time, the level profile will change.

When preparation starts and food products 187 enter the conveyor belt 110 as illustrated in FIG. 3, the oil level rises due to the displaced oil volume of the product. The rise of the oil level is detected by the first oil level sensor 170, which controls the first oil inlet control valve 184 to regulate the flow of oil to be reduced from the oil inlet circuit 182 into the trough 105 through the first oil inlet 150. Depending on the how much the oil level tends to rise, even the second oil level sensor 175 may detect a rise of the oil level. In that case the second oil level sensor 175 controls the first outlet control valve 185 to regulate the flow of oil from the trough 105 through the first outlet 155.

On the other hand, if the cooking oil level is detected to decrease by one or more of the oil level sensors in a cooking zone, the inlet control valve in that zone is regulated to open to some degree in order to increase the flow of oil through the oil inlet into the through until the predetermined cooking oil level is obtained in the through.

Hence, the oil level sensors in a particular zone may be configured to co-operate and control the oil inlet control valve and the oil outlet control valve of said particular zone to ensure that a predetermined oil level is kept in the trough. Since the predetermined oil level is desirable or rather required in each cooking zone along the length of the trough, the oil level sensors and the corresponding inlet and outlet valves may be configured to co-operate in pairs, crosswise, or together to provide the predetermined oil level. If the cooking level rises in a cooking zone the outlet control valve at the end of that zone is controlled to open to some degree until the predetermined cooking oil level is obtained in the through. If the cooking oil level is reduced, due to an increased speed of the conveyor belt causing a pump effect, the outlet control valve at the end of that zone may be regulated to close to some degree until the predetermined cooking oil level is obtained in the through. Preferably, the flow rate of the cooking oil should be at a similar speed as the speed of the conveyor belt.

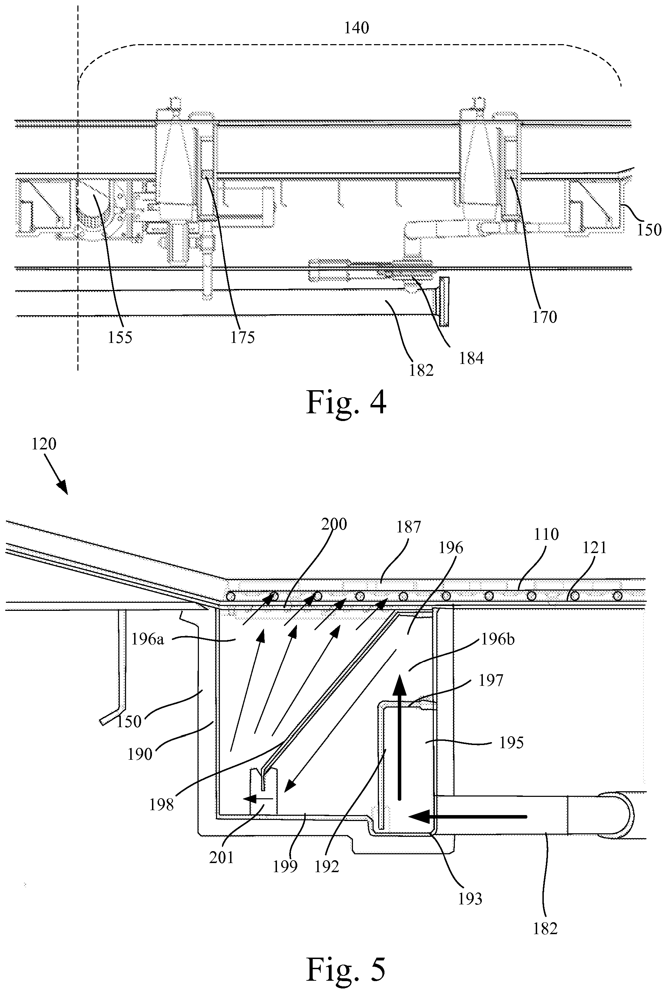

FIG. 4 is a cross-sectional view of a portion of the multi-zone fryer 100 illustrating the first cooking zone 140 in further detail.

FIG. 5 is a close-up cross-sectional view of a portion of the multi-zone fryer illustrating the first oil inlet 150 including an inlet trough 190 extending laterally along the width of the bottom 121 of the cooking trough 105. The sectional area of the inlet trough may be rectangular. An angle plate 192 facing a bottom corner 193 forms a small first chamber 195 in the far end of the inlet trough 190 facing away from the inlet end 121, and a main chamber 196. The top part of the angle plate 192 has plurality of holes 197 providing a fluid connection from the oil inlet circuit 182 into the main chamber 196 of the inlet trough 190. An inclined plate 198 is arranged in the main chamber 196 extending from the bottom 199 diagonally to a perforated outlet plate 200 of the main chamber 196 forming a first sub camber 196a and second sub chamber 196b. The inclined plate 198 extends along the width of the inlet trough 190 with a narrow gap 201 along the bottom 199 forming a fluid connection between the sub chambers 196a and 196b. The perforated outlet plate 200 is provided with a pattern of lip shaped holes arranged to feed cooking oil into the through in the same direction as the movement of the food products on the conveyor belt. However, the cooking oil should be pumped into the through relatively slow in order to prevent turbulence.

Thus, the oil inlet circuit 182 is arranged in fluid connection with the cooking trough 105 via a labyrinth including the inlet trough 190, the holes 197 to the first sub chamber 196a, the inclined plate 198, the narrow gap 201, the second sub chamber 196b, and the perforated outlet plate 200. During preparation the cooking oil flows through the labyrinth in a direction illustrated by the arrows in FIG. 5.

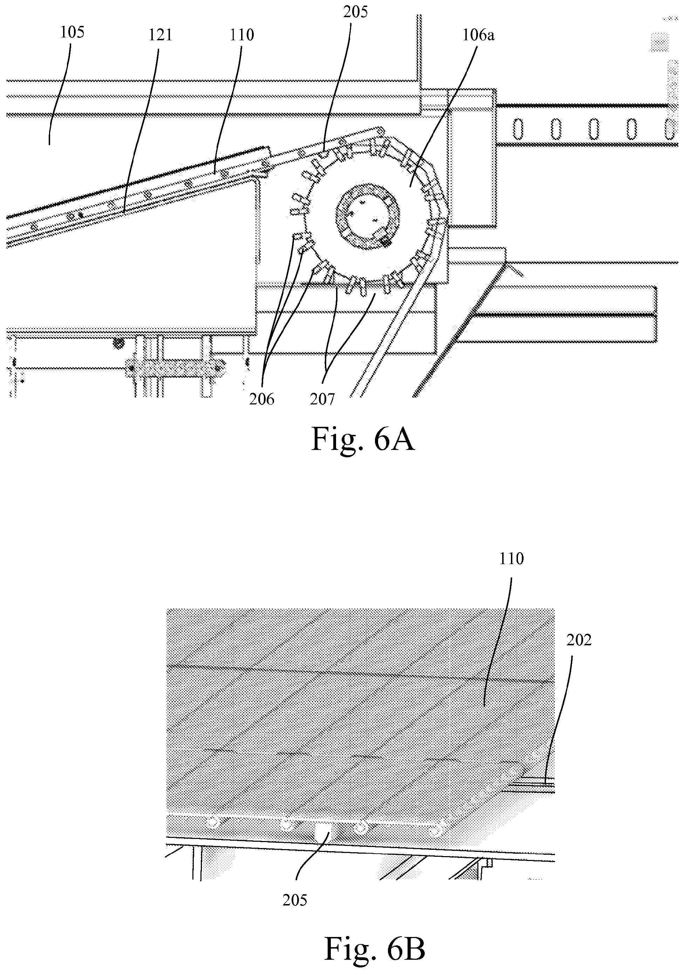

FIGs. 6A and 6B show close-up cross-sectional views of portions of the multi-zone fryer shown in FIG. 1 and 1A. As described above, the rollers 106a, 106b and the conveyor belt 110 may be driven by the at least one electric drive motor. In this embodiment of the multi-zone fryer, the underside of the conveyor belt 110 is provided with one or more transvers scrapers 205 arranged to sweep or scrape sediment and deposit from the bottom 121 of the trough when the conveyor belt 110 is moving along the length of the through 105. Thereby, the sediment and deposit follow the flow of cooking oil towards the oil outlets 155, 165 for filtration by filtering means of the cooking oil circulation system. The rollers 106a, 106b are open and provided with flat bars 206 or strips extending from the circumference of and transvers along the width of the rollers. The scrapers 205 may fit into gaps 207 between the flat bars forming teeth to drive the conveyor belt. Since the scrapers 205 and teeth 206 extend along the width of the rollers, potential wear is reduced. Due to the gaps or openings 207 between the scrapers 205 of the open rollers 106a, 106b, sediment and deposit are allowed to pass through the rollers, thereby preventing accumulation of sediment and deposit.

Referring to FIG. 7, a block diagram of a control system is illustrated, which may comprise a cooking process control device 700, configured to run the operation of the multi-zone fryer 100. The cooking process control device 700 may be located within a cabinet of the multi-zone fryer and is operatively connected to and configured to receive input signals from the oil level sensors 170, 175, 180, 181 and to control the operation of the oil inlet and outlet valves 184, 185, 184a, 185a according to the method described below. Further, the cooking process control device 700 may be operatively connected to and configured to control the operation of the oil circulation system including the oil inlet circuit 182 and an oil outlet circuit 183, and the heat exchanger 210. As describe above, heated cooking oil is provided to the cooking trough 105 by the circulation pump 107, which may also be controlled by the cooking process control device. The at least on drive motor for driving the rollers 106a, 106b may also be operatively connected to and controlled by the cooking process control device 700.

FIG. 1A is schematic perspective view of a synchronized dual drive of the conveyor belt 110. In this embodiment, the dual drive comprises a first separate drive 136a operatively connected to the first roller 106a and a second separate drive 136b operatively connected to the second roller 106b. The first and second separate drives 136a and 136b may be electric drive motors or any other drives. In this embodiment, a slave computer device 700a is connected to and configured to control the operation of the first separate drive 136a, and a master computer device 700b is connected to and configured to control the operation of the second separate drive 136b and to achieve synchronized dual drive of the conveyor belt 110. Thereby, the conveyor belt advantageously will follow the bottom 121 of the cooking trough 105 on the sliding strips 202 along the length of the trough up to about at least, but not limited to, 20 to 30 m. In one embodiment, the trough 105 and conveyor may be about 25m. The master computer device 700b and the slave computer device 700a may be operatively connected to the cooking process control device 700. In one embodiment, the cooking process control device 700 may be configured to control the overall operation to achieve synchronized dual drive of the conveyor belt 110 via the master computer device 700b and the slave computer device 700a.

In one embodiment, the cooking process control device 700 is configured to control the circulation pump/s 107 to provide a flowrate of the cooking oil individually in each zone to be equal or essentially equal to the speed of the conveyor belt, for example but not limited to 0.15-0.5 m/s. Advantageously, the synchronization of the flowrate of the cooking oil with the movement of the conveyor belt will cause the products to stay on the conveyor belt during the frying process along the cooking trough.

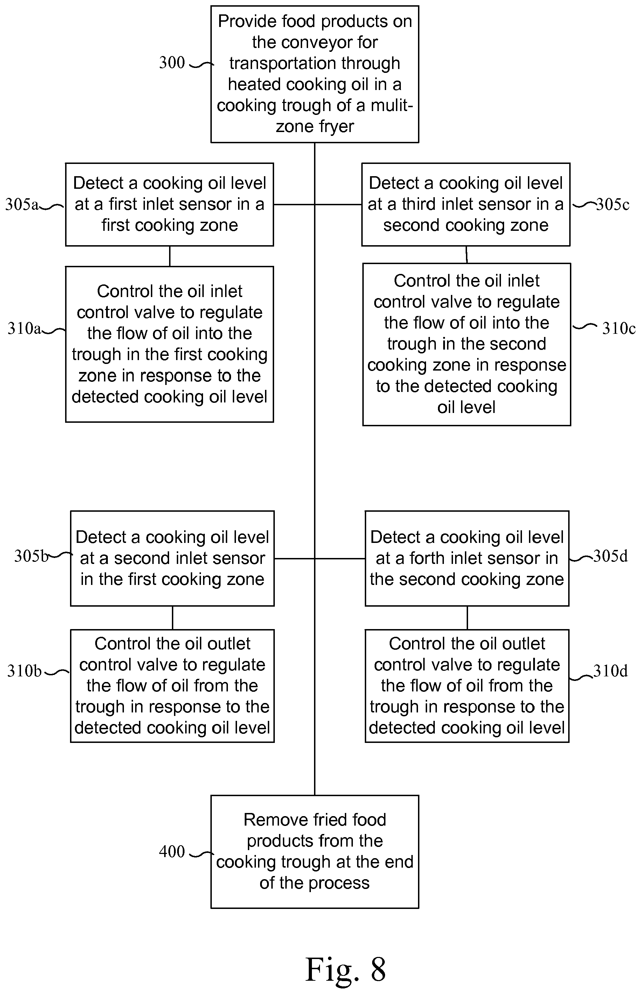

Reference is made to FIG. 8, which is a flowchart of a method for preparation of fried foodstuff according to an embodiment. The method may involve a multi-zone fryer according to the present disclosure.

Initially, the cooking trough 105 is filled with heated cooking oil 110 via the oil inlets 150, 160 to a desired level, which may be, but is not limited to, 5-100 mm or preferably 10-35 mm depending on the thickness of the products 187. The cooking oil is circulated by means of the oil circulation system. The cooking oil may be withdrawn from the trough 105 through the oil outlets 155, 165 by means of the pump 107 before it is reheated to a determined temperature, which may be 150-195°C, preferably 170-180°C, by the heat exchanger and forwarded via the oil inlet circuit 182 through the oil inlets 150, 160.

The cooking process or preparation starts by providing 300 food products 187 on the conveyor belt 110 for transportation through the heated cooking oil to be fried in the multi zone fryer 100. The cooking oil level rises due to the displaced oil volume of the product. The rise of the oil level is detected 305a by the first oil level sensor 170, which controls 310a the first oil inlet control valve 184 to regulate the flow of oil to be reduced from the oil inlet circuit 182 into the trough 105 through the first oil inlet 150 in response to the detected cooking oil level. Depending on how much the cooking oil level tends to rise, even the second oil level sensor 175 may detect 305b a rise of the oil level. In that case the second oil level sensor 175 controls 310b the first outlet control valve 185 to regulate the flow of oil from the trough 105 through the first outlet 155. The temperature of the cooking oil may drop about 5-15°C from the inlet to the outlet in each zone of the trough.

The cooking oil level may vary even in the second zone 145. The oil level is detected 305c by the third oil level sensor 180, which controls 310c another oil inlet control valve 184a to regulate the flow of oil from the oil inlet circuit 182 into the trough 105 through the second oil inlet 160 in response to the detected oil level. Depending on the how much the cooking oil level tends to rise, even the fourth oil level sensor 181 may detect 305d a rise of the oil level. In that case the fourth oil level sensor 181 controls 310d the another outlet control valve 185a to regulate the flow of oil from the trough 105 through the second outlet 165. At the end of the process, fried food products are removed 400 from the cooking trough.

Hence, the oil level sensors in a particular zone may be configured to co-operate and control the oil inlet control valve and the oil outlet control valve of said particular zone to ensure that a predetermined oil level, which may be, but is not limited to, 5-100 mm or preferably 10-35 mm depending on the thickness of the products 187, is kept in the trough. More particularly, the cooking process control device 700 is configured to control the oil inlet control valves and oil outlet control valves of each zone in response to sensor signals of the oil level sensors. Since the same predetermined oil level is desirable or rather required in each cooking zone along the length of the trough, the oil level sensors and the corresponding inlet and outlet valves may be configured to co-operate in pairs, crosswise, or together to provide the predetermined oil level. In some embodiments, the cooking process device may be configured to control the different valves within a particular control interval. For example, the outlet valves may not be closed and the inlet valves may have a limited maximum opening.

In some embodiments, the oil level sensors in different zones may be configured to co-operate and control the oil inlet control valves and the oil outlet control valves of the different zones to ensure that a predetermined oil level, which may be, but is not limited to, 5-100 mm or preferably 10-35 mm, depending on the thickness of the products 187, is kept at the same level in the different zones in the trough.

Embodiments of the present invention have been described herein with reference to a multi-zone fryer and the operation of the multi-zone fryer. It will be understood that the control of the operation of the multi-zone fryer and the method of preparation of fried foodstuff may be implemented in the form of an entirely hardware embodiment, including but not limited to the cooking process control device 700, or an embodiment combining software and hardware aspects including computer program instructions to control the different components and systems of the multi-zone fryer. These computer program instructions may be provided to a processor of the cooking process control device, a general purpose computer, special purpose computer, computing device or any other programmable data processing apparatus of the multi-zone fryer, such that the instructions when executed create means for implementing the specified functions/acts of the multi-zone frying process to operate the multi-zone fryer accordingly. The multi-zone fryer is operated according to different recipes, which are defined by means of different computer program products operating on different parameters, including temperatures, frying time, cooking oil level etc.

The master computer device 700b and the slave computer device 700a may be implemented in the form of an entirely hardware embodiment, or an embodiment combining software and hardware aspects including computer program instructions, to control the operation of the first and second drives 136a, 136b to provide synchronized dual drive of the conveyor belt 110.

## Claims

1. A multi-zone fryer (100) for preparation of fried food products (187)
comprising an elongated cooking trough (105) for holding a volume of heated cooking oil (115), at least first and second rollers (106a, 106b), and a conveyor (110) arranged to extend and transport the food products in a direction from the first roller (106a) at an inlet end (120), along the bottom (121) of the trough to the second roller (106b) at an outlet end (122), wherein the elongated cooking trough (105) comprises at least a first and second cooking zone (140, 145), **characterized in that** each cooking zone has at least two oil level sensors (170,180;175,181), including a first oil level sensor (170, 180) and a second oil level sensor (175, 181), wherein the first oil level sensor (170, 180) is arranged at the beginning of the cooking zone (140, 145) and the second oil level sensor (175, 181) is arranged at the end of the cooking zone (140, 145), wherein a cooking process control device (700) is configured to receive input signals from the oil level sensors (170, 175, 180, 181) and to control an oil inlet control valve (184;184a) and an oil outlet control valve (185;185a) of each cooking zone (140,145) arranged in fluid connection with the trough (105) and an oil circulation system to ensure that a predetermined oil level is kept in the trough (105).

2. The multi-zone fryer of claim 1, wherein the oil level sensors in different zones (140;145) are configured to co-operate and, by means of the cooking process control device (700), control the oil inlet control valves (184;184a) and the oil outlet control valves (185;185a) of the different zones (140;145) to ensure that a predetermined oil level is kept at the same level in the different zones in the trough (105).

3. The multi-zone fryer of any of the claims 1-2, comprising three, four, five or more cooking zones, arranged in fluid connection with each other along the length of the trough (105).

4. The multi-zone fryer according to any of the previous claims, wherein the oil level sensors in a particular zone are configured to co-operate and control the oil inlet control valve and the oil outlet control valve of said particular zone to ensure that a predetermined oil level is kept in the trough.

5. The multi-zone fryer according to claim 4, wherein the oil level sensors and the corresponding inlet and outlet valves are configured to co-operate in pairs, crosswise, or together to provide the predetermined oil level.

6. The multi-zone fryer according to claim 4 or 5, wherein the oil level sensors and the corresponding inlet and outlet valves are configured to provide the oil level in the trough at least at the height of the particular product on the conveyor belt, when the product is moved through every cooking zone along a horizontal main portion (130) of the run to achieve a uniform deep-frying of the entire product.

7. The multi-zone fryer according to any of the previous claims 1-6, wherein each cooking zone comprises an oil inlet (150,160), an oil outlet (155,165), having an intermediate part of the cooking trough (105) extending between said oil inlet and oil outlet (155,165).

8. The multi-zone fryer of claim 7, wherein the cooking zones (140,145) are in fluid connection, a first oil level sensor (170) arranged at the beginning of the first cooking zone (140) after and in proximity to a first oil inlet (150) in said direction, a second oil level sensor (175) arranged at the end of the first cooking zone (140) before a first oil outlet (155), a third oil level sensor (180) arranged at the beginning of the second cooking zone (145) after and in proximity to ta second oil inlet (160), and a fourth oil level sensor (181) arranged at the end of the second cooking zone (145) and before a second oil outlet (165), each oil inlet (150,160) is connected to an oil inlet circuit (182) via an oil inlet control valve (184, 184a) and each oil outlet (155,65) is connected to an oil outlet circuit (183) via an oil outlet control valve (185,185a),
wherein the first oil level sensor (170) is configured to detect the oil level of the cooking oil in the trough (105) near the first oil inlet (150) and by means of the cooking process control device (700) to control the first oil inlet control valve (184) to regulate the flow of oil from the oil inlet circuit (182) into the trough (105), the second oil level sensor (175) is configured to detect the oil level near the first oil outlet (155) and by means of the cooking process control device (700) to control the first oil outlet control valve (185) to control the flow of oil from the trough (105) through to the first oil outlet (155) to the oil outlet circuit (183), and
the third oil level sensor (180) is configured to detect the oil level of the cooking oil in the trough (105) near the second oil inlet (155) and by means of the cooking process control device (700) to control the second oil inlet control valve (184a) to regulate the flow of oil from the oil inlet circuit (182) into the trough (105), the fourth oil level sensor (181) is configured to detect the oil level near the second oil outlet (165) and by means of the cooking process control device (700) to control the second oil outlet control valve (185a) to control the flow of oil from the trough (105) through the second oil outlet (165) to the oil outlet circuit (183) until the predetermined cooking oil level is obtained in the through (105).

9. The multi-zone fryer of claim 7, wherein the oil inlet (150) includes an inlet trough (190) extending laterally along the width of the bottom (121) of the cooking trough (105), wherein the sectional area of the inlet trough is rectangular, an angle plate (192) facing a bottom corner (193) forming a first chamber (195) in the far end of the inlet trough (190), and a main chamber (196), wherein the top part of the angle plate (192) has plurality of holes (197) providing a fluid connection from the oil inlet circuit (182) into the main chamber (196) of the inlet trough (190), an inclined plate (198) arranged in the main chamber (196) extending from the bottom (199) diagonally to a perforated outlet plate (200) of the main chamber (196) forming a first and second sub chamber (196a, 196b), wherein the inclined plate (198) extends along the width of the inlet trough (190) with a gap (201) along the bottom (199) forming a fluid connection between the sub chambers (196a, 196b), and the perforated outlet plate (200) is provided with a pattern of lip shaped holes arranged to feed cooking oil into the trough in the same direction as the movement of the food products on the conveyor.

10. The multi-zone fryer according to any of the previous claims, comprising a circulation pump (107) configured to pump the cooking oil into the trough to provide a flowrate of the cooking oil individually in each zone to be equal or essentially equal to the speed of the conveyor belt in order to prevent turbulence.

11. The multi-zone fryer according to any of the previous claims, wherein the cooking process control device (700) is configured to control the operation of the multi-zone fryer (100).

12. The multi-zone fryer according to claim 11, wherein the process control device (700) is operatively connected to and configured to receive input signals from the oil level sensors (170, 175, 180, 181) and to control the operation of the oil inlet and outlet valves (184, 185, 184a, 185a) and the oil circulation system including the oil inlet circuit (182) and an oil outlet circuit (183), such that the predetermined oil level is kept in the trough (105).

13. A method for preparation of fried foodstuff in a multi-zone fryer according to any of the previous claims 2-12, comprising:
providing (300) food products (187) on the conveyor (110) for transportation through the heated cooking oil to be fried, wherein the cooking oil level rises due to the displaced oil volume of the product;
detecting (305a) the rise of the oil level by the first oil level sensor (170) in the first cooking zone (140);
controlling (310a) the first oil inlet control valve (184) to regulate the flow of oil to be reduced from the oil inlet circuit (182) into the trough (105) through the first oil inlet (150) in response to the detected cooking oil level;
detecting (305b) the rise of the oil level by the second oil level sensor (175);
controlling (310b) the first outlet control valve (185) to regulate the flow of oil from the trough (105) through the first outlet (155);
detecting (305c) the oil level by the third oil level sensor (180) in the second cooking zone (145);
controlling (310c) the another oil inlet control valve (184a) to regulate the flow of oil from the oil inlet circuit (182) into the trough (105) through the second oil inlet (160) in response to the detected oil level;
detecting (305d) the oil level by the fourth oil level sensor (181);
controlling (310d) the another outlet control valve (185a) for regulating the flow of oil from the trough (105) through the second outlet (165) to ensure that a predetermined oil level is kept in the trough.

14. The method of claim 13, wherein the predetermined oil level in the trough is regulated to be at a level between 5-100 mm.

15. The method of claim 13 or 14, wherein the predetermined oil level in the trough is regulated to be at a level between 10-35 mm.

16. A computer program comprising program instructions for causing a cooking process control device (700) having computer capability to perform a method for preparation of fried foodstuff in a multi-zone fryer according to any of the claims 2-12, when said program is run on said cooking process control device, the method comprising:
detecting (305a) the rise of the oil level by receiving an input signal from the first oil level sensor (170) in the first cooking zone (140);
controlling (310a) the first oil inlet control valve (184) to regulate the flow of oil to be reduced from the oil inlet circuit (182) into the trough (105) through the first oil inlet (150) in response to the detected cooking oil level;
detecting (305b) the rise of the oil level by receiving an input signal from the second oil level sensor (175);
controlling (310b) the first outlet control valve (185) to regulate the flow of oil from the trough (105) through the first outlet (155);
detecting (305c) the oil level by receiving an input signal from the third oil level sensor (180) in the second cooking zone (145);
controlling (310c) the another oil inlet control valve (184a) to regulate the flow of oil from the oil inlet circuit (182) into the trough (105) through the second oil inlet (160) in response to the detected oil level;
detecting (305d) the oil level by receiving an input signal from the fourth oil level sensor (181);
controlling (310d) the another outlet control valve (185a) for regulating the flow of oil from the trough (105) through the second outlet (165) to ensure that a predetermined oil level is kept in the trough.

17. A computer program according to claim 16 on a carrier.

18. The computer program according to claim 17, wherein said carrier is a record medium, computer memory, read-only memory, computer-readable medium or an electrical carrier signal.

## Patentansprüche

1. Mehrzonen-Fritteuse (100) zum Zubereiten von frittierten Lebensmittelprodukten (187) aufweisend eine längliche Kochwanne (105) zur Aufnahme eines Volumens von erhitztem Speiseöl (115), zumindest eine erste und zweite Laufrolle (106a, 106b), und ein Förderer (110), der dazu eingerichtet ist, die Lebensmittelprodukte in einer Richtung von der ersten Laufrolle (106a) an einem Einlassende (120), entlang des Bodens (121) der Wanne zu der zweiten Laufrolle (106b) an einem Auslassende (122), auszuweiten und zu transportieren, wobei die längliche Kochwanne (105) zumindest eine erste und zweite Kochzone (140, 145) aufweist, **dadurch gekennzeichnet, dass** jede Kochzone zumindest zwei Ölstandsensoren (170,180;175,181) hat, die einen ersten Ölstandsensor (170, 180) und einen zweiten Ölstandsensor (175, 181) umfassen, wobei der erste Ölstandsensor (170, 180) am Anfang der Kochzone (140, 145) angeordnet ist und der zweite Ölstandsensor (175, 181) am Ende der Kochzone (140, 145) angeordnet ist, wobei eine Kochprozess-Steuereinrichtung (700) dazu eingerichtet ist, Eingangssignale von den Ölstandsensoren (170, 175, 180, 181) zu erhalten und ein Öleinlass-Steuerventil (184; 184a) und ein Ölauslass-Steuerventil (185; 185a) jeder Kochzone (140, 145) zu steuern, die in einer Fluidverbindung mit der Wanne (105) und einem Öl-Zirkulationssystem angeordnet sind, um sicherzustellen, dass ein vorbestimmter Ölstand in der Wanne (105) gehalten wird.

2. Mehrzonen-Fritteuse gemäß Anspruch 1, wobei die Ölstandsensoren in verschiedenen Zonen (140; 145) dazu eingerichtet sind, zusammenzuarbeiten und, mithilfe der Kochprozess-Steuereinrichtung (700), die Öleinlass-Steuerventile (184; 184a) und die Ölauslass-Steuerventile (185; 185a) der verschiedenen Zonen (140; 145) zu steuern, um sicherzustellen, dass ein vorbestimmter Ölstand in den verschiedenen Zonen in der Wanne (105) auf dem gleichen Stand gehalten wird.

3. Mehrzonen-Fritteuse gemäß einem der Ansprüche 1-2, aufweisend drei, vier, fünf oder mehr Kochzonen, die entlang der Länge der Wanne (105) miteinander in Fluidverbindung angeordnet sind.

4. Mehrzonen-Fritteuse gemäß einem der vorstehenden Ansprüche, wobei die Ölstandsensoren in einer bestimmten Zone dazu eingerichtet sind, zusammenzuarbeiten und das Öleinlass-Steuerventil und das Öl Auslass-Steuerventil der bestimmten Zonen zu steuern, um sicherzustellen, dass ein vorbestimmter Ölstand in der Wanne gehalten wird.

5. Mehrzonen-Fritteuse gemäß Anspruch 4, wobei die Ölstandsensoren und die entsprechenden Einlass- und Auslassventile dazu eingerichtet sind, paarweise, kreuzweise, oder gemeinsam zusammenzuarbeiten, um den vorbestimmten Ölstand bereitzustellen.

6. Mehrzonen-Fritteuse gemäß Anspruch 4 oder 5, wobei die Ölstandsensoren und die entsprechenden Einlass- und Auslassventile dazu eingerichtet sind, den Ölstand in der Wanne zumindest auf der Höhe des jeweiligen Produkts auf dem Förderband bereitzustellen, wenn das Produkt durch jede Kochzone entlang eines horizontalen Hauptabschnitts (130) von der Strecke bewegt wird, um ein gleichmäßiges Frittieren des gesamten Produkts zu erreichen.

7. Mehrzonen-Fritteuse gemäß einem der vorstehenden Ansprüche 1-6, wobei jede Kochzone einen Öleinlass (150, 160), einen Ölauslass (155, 165) aufweist, mit einem Zwischenteil der Kochwanne (105), dass sich zwischen dem Öleinlass und dem Ölauslass (155, 165) erstreckt.

8. Mehrzonen-Fritteuse gemäß Anspruch 7, wobei die Kochzonen (140, 145) in Fluidverbindung sind, wobei ein erster Ölstandsensor (170) an dem Anfang der ersten Kochzone (140) nach und in der Nähe zu einem ersten Öleinlass (150) in der Richtung angeordnet ist, wobei ein zweiter Ölstandsensor (175) an dem Ende der ersten Kochzone (150) vor einem ersten Ölauslass (155) angeordnet ist, wobei ein dritter Ölstandsensor (180) an dem Anfang der zweiten Kochzone (145) nach und in der Nähe zu einem zweiten Öleinlass (160) angeordnet ist, und wobei ein vierter Ölstandsensor (181) an dem Ende der zweiten Kochzone (145) und vor einem zweiten Ölauslass (165) angeordnet ist, wobei jeder Öleinlass (150,160) mit einem Öleinlass-Kreislauf (182) über ein Öleinlass-Steuerventil (184, 184a) verbunden ist und jeder Ölauslass (155,65) mit einem Ölauslass-Kreislauf (183) über ein Ölauslass-Steuerventil (185, 185a) verbunden ist,
wobei der erste Ölstandsensor (170) dazu eingerichtet ist, den Ölstand des Speiseöls in der Wanne (105) in der Nähe des ersten Öleinlasses zu detektieren und das erste Öleinlass-Steuerventil (184) mithilfe der Kochprozess-Steuereinrichtung (700) zu steuern, um den Durchfluss von Öl von dem Öleinlass-Kreislauf (182) in die Wanne (105) zu regulieren, wobei der zweite Ölstandsensor (175) dazu eingerichtet ist, den Ölstand in der Nähe des ersten Ölauslasses (155) zu detektieren und das erste Ölauslass-Steuerventil (185) mithilfe der Kochprozess-Steuereinrichtung (700) zu steuern, um den Durchfluss von Öl von der Wanne (105) durch den ersten Ölauslass (155) zu dem Ölauslass-Kreislauf (183) zu steuern, und
wobei der dritte Ölstandsensor (180) dazu eingerichtet ist, den Ölstand des Speiseöls in der Wanne (105) in der Nähe des zweiten Öleinlasses (155) zu detektieren und das zweite Öleinlass-Steuerventil (184a) mithilfe der Kochprozess-Steuereinrichtung (700) zu steuern, um den Durchfluss von Öl von dem Öleinlass-Kreislauf (182) in die Wanne (105) zu regulieren, wobei der vierte Ölstandsensor (181) dazu eingerichtet ist, den Ölstand in der Nähe des zweiten Ölauslasses (165) zu detektieren und das zweite Ölauslasses-Steuerventil (185a) mithilfe der Kochprozess-Steuereinrichtung (700) zu steuern, um den Durchfluss von Öl von der Wanne (105) durch den zweiten Ölauslass (165) zu dem Ölauslass-Kreislauf (183) zu steuern, bis der vorbestimmte Speiseölstand in der Wanne (105) besteht

9. Mehrzonen-Fritteuse gemäß Anspruch 7, wobei der Öleinlass (150) eine Einlasswanne (190), die sich seitlich entlang der Breite des Bodens (121) der Kochwanne (105) erstreckt, umfasst, wobei die Querschnittsfläche der Einlasswanne rechteckig ist, wobei eine Winkelplatte (192), die einer unteren Ecke (193) zugewandt ist, eine erste Kammer (195) im hinteren Ende der Einlasswanne (190) bildet, und eine Hauptkammer (196), wobei das Oberteil der Winkelplatte (192) eine Mehrzahl von Öffnungen (197) hat, die eine Fluidverbindung von dem Öleinlass-Kreislauf (182) in die Hauptkammer (196) der Einlasswanne (190) bereitstellen, eine in der Hauptkammer (196) angeordnete geneigte Platte (198), die sich vom Boden (199) diagonal zu einer perforierten Auslassplatte (200) der Hauptkammer (196) erstreckt, die eine erste und zweite Unterkammer (196a, 196b) bilden, wobei die geneigte Platte (198) sich entlang der Breite der Einlasswanne (190) mit einem Spalt (201) entlang des Bodens (199) erstreckt, der eine Fluidverbindung zwischen den Unterkammern (196a, 196b) bildet, und wobei die perforierte Auslassplatte (200) mit einem Muster von lippenförmigen Öffnungen ausgestattet ist, die dazu eingerichtet sind, das Speiseöl in die Wanne in der gleichen Richtung wie die Bewegung der Lebensmittelprodukte auf dem Förderer zuzuführen.

10. Mehrzonen-Fritteuse gemäß einem der vorstehenden Ansprüche, aufweisend eine Umwälzpumpe (107), die dazu eingerichtet ist, das Speiseöl in die Wanne zu pumpen, um eine Durchflussrate des Speiseöls individuell in jeder Zone bereitzustellen, die gleich oder im Wesentlichen gleich der Geschwindigkeit des Förderbands ist, um Turbulenzen zu vermeiden.

11. Mehrzonen-Fritteuse gemäß einem der vorstehenden Ansprüche, wobei die Kochprozess-Steuereinrichtung (700) dazu eingerichtet ist, den Betrieb der Mehrzonen-Fritteuse (100) zu steuern.

12. Mehrzonen-Fritteuse gemäß Anspruch 11, wobei die Prozess-Steuereinrichtung (700) operativ verbunden und dazu eingerichtet ist, Eingangssignale von den Ölstandsensoren (170, 175, 180, 181) zu erhalten und den Betrieb der Öleinlass- und Ölauslassventile (184, 185, 184a, 185a) und des Öl-Zirkulationssystem einschließlich dem Öleinlass-Kreislauf (182) und einem Ölauslass-Kreislauf (183) zu steuern, so dass der vorbestimmte Ölstand in der Wanne (105) gehalten wird.

13. Verfahren zur Zubereitung von frittierten Lebensmitteln in einer Mehrzonen-Fritteuse gemäß einem der Ansprüche 2-12, aufweisend:
Bereitstellen (300) von Lebensmittelprodukten (187) auf dem Förderer (110) zum Transport durch das erhitzte Speiseöl, um frittiert zu werden, wobei der Speiseölstand aufgrund des verdrängten Ölvolumens des Produkts ansteigt;
Detektieren (305a) des Anstiegs des Ölstands durch den ersten Ölstandsensor (170) in der ersten Kochzone (140);
Steuern (310a) des ersten Öleinlass-Steuerventils (184), um den zu reduzierenden Durchfluss von Öl aus dem Öleinlass-Kreislauf (182) durch den ersten Öleinlass (150) in die Wanne (105) in Reaktion zu dem detektierten Speiseölstand zu regulieren;
Detektieren (305b) des Anstiegs des Ölstands durch den zweiten Ölstandsensor (175);
Steuern (310b) des ersten Ölauslass-Steuerventils (185), um den Durchfluss von Öl von der Wanne (105) durch den ersten Auslass (155) zu regulieren;
Detektieren (305c) des Ölstands durch den dritten Ölstandsensor (180) in der zweiten Kochzone (145);
Steuern (310c) des anderen Öleinlass-Steuerventils (184a), um den Durchfluss von Öl aus dem Öleinlass-Kreislauf (182) durch den zweiten Öleinlass (160) in die Wanne (105), in Reaktion zu dem detektierten Ölstand, zu regulieren;
Detektieren (305d) des Ölstands durch den vierten Ölstandsensor (181);
Steuern (310d) des anderen Auslass-Steuerventils (185a) zum Regulieren des Durchflusses von Öl von der Wanne (105) durch den zweiten Auslass (165), um sicherzustellen, dass ein vorbestimmter Ölstand in der Wanne gehalten wird.

14. Verfahren gemäß Anspruch 13, wobei der vorbestimmte Ölstand in der Wanne auf einen Stand zwischen 5-100 mm reguliert wird.

15. Verfahren gemäß Anspruch 13 oder 14, wobei der vorbestimmte Ölstand in der Wanne auf einen Stand zwischen 10-35 mm reguliert wird.

16. Computerprogramm, das Programmanweisungen aufweist, um eine Kochprozess-Steuereinrichtung (700) mit Computerfähigkeit zu veranlassen ein Verfahren zum Zubereiten von frittierten Lebensmitteln in einer Mehrzonen-Fritteuse gemäß einem der Ansprüche 2-12 auszuführen, wenn das Programm auf der Kochprozess-Steuereinrichtung ausgeführt wird, wobei das Verfahren aufweist:
Detektieren (305a) des Anstiegs des Ölstands durch Erhalten eines Eingangssignals von dem ersten Ölstandsensor (170) in der ersten Kochzone (140);
Steuern (310a) des ersten Öleinlass-Steuerventils (184), um den zu reduzierenden Durchfluss von Öl aus dem Öleinlass-Kreislauf (182) durch den ersten Öleinlass (150) in die Wanne (105) in Reaktion zu dem detektierten Speiseölstand zu regulieren;
Detektieren (305b) des Anstiegs des Ölstands durch Erhalten eines Eingangssignals von dem zweiten Ölstandsensor (175);
Steuern (310b) des ersten Ölauslass-Steuerventils (185), um den Durchfluss von Öl von der Wanne (105) durch den ersten Auslass (155) zu regulieren;
Detektieren (305c) des Ölstands durch Erhalten eines Eingangssignals von dem dritten Ölstandsensor (180) in der zweiten Kochzone (145);
Steuern (310c) des anderen Öleinlass-Steuerventils (184a), um den Durchfluss von Öl aus dem Öleinlass-Kreislauf (182) durch den zweiten Öleinlass (160) in die Wanne (105) in Reaktion zu dem detektierten Ölstand zu regulieren;
Detektieren (305d) des Ölstands durch Erhalten eines Eingangssignals von dem vierten Ölstandsensor (181);
Steuern (310d) des anderen Auslass-Steuerventils (185a) zum Regulieren des Durchflusses von Öl von der Wanne (105) durch den zweiten Auslass (165), um sicherzustellen, dass ein vorbestimmter Ölstand in der Wanne gehalten wird.

17. Computerprogramm gemäß Anspruch 16 auf einem Träger.

18. Computerprogramm gemäß Anspruch 17, wobei der Träger ein Aufzeichnungsmedium, Computerspeicher, Festwertspeicher, computerlesbares Medium oder ein elektrisches Trägersignal ist.

## Revendications

1. Friteuse multizone (100) pour la préparation de produits alimentaires frits (187)
comprenant une cuve de cuisson allongée (105) destinée à contenir un volume d'huile de cuisson chauffée (115), au moins des premier et second rouleaux (106a, 106b), et un convoyeur (110) conçu pour s'étendre et pour transporter les produits alimentaires dans un sens allant du premier rouleau (106a) au niveau d'une extrémité d'entrée (120), le long de la partie inférieure (121) de la cuve, au second rouleau (106b) au niveau d'une extrémité de sortie (122), dans laquelle la cuve de cuisson allongée (105) comprend au moins des première et seconde zones de cuisson (140, 145), **caractérisée en ce que** chaque zone de cuisson comporte au moins deux capteurs de niveau d'huile (170, 180 ; 175, 181), comprenant un premier capteur de niveau d'huile (170, 180) et un deuxième capteur de niveau d'huile (175, 181), dans laquelle le premier capteur de niveau d'huile (170, 180) est disposé au début de la zone de cuisson (140, 145) et le deuxième capteur de niveau d'huile (175, 181) est disposé à la fin de la zone de cuisson (140, 145), dans laquelle un dispositif de contrôle du processus de cuisson (700) est configuré pour recevoir des signaux d'entrée en provenance des capteurs de niveau d'huile (170, 175, 180, 181) et pour commander une vanne de commande d'entrée d'huile (184 ; 184a) et une vanne de commande de sortie d'huile (185 ; 185a) de chaque zone de cuisson (140, 145) disposés en communication fluidique avec la cuve (105) et un système de circulation d'huile pour garantir le maintien d'un niveau d'huile prédéterminé dans la cuve (105).

2. Friteuse multizone selon la revendication 1, dans laquelle les capteurs de niveau d'huile des différentes zones (140 ; 145) sont configurés pour coopérer et, au moyen du dispositif de contrôle du processus de cuisson (700), pour commander les vannes de commande d'entrée d'huile (184 ; 184a) et les vannes de commande de sortie d'huile (185 ; 185a) des différentes zones (140 ; 145) de façon à garantir le maintien d'un niveau d'huile prédéterminé au même niveau dans les différentes zones de la cuve (105).

3. Friteuse multizone selon l'une ou l'autre des revendications 1 et 2, comprenant au moins trois, quatre, ou cinq zones de cuisson, disposées en communication fluidique les unes avec les autres sur la longueur de la cuve (105).

4. Friteuse multizone selon l'une quelconque des revendications précédentes, dans laquelle les capteurs de niveau d'huile d'une zone particulière sont configurés pour coopérer et pour commander la vanne de commande d'entrée d'huile et la vanne de commande de sortie d'huile de ladite zone particulière de façon à garantir le maintien d'un niveau d'huile prédéterminé dans la cuve.

5. Friteuse multizone selon la revendication 4, dans laquelle les capteurs de niveau d'huile et les vannes d'entrée et de sortie correspondantes sont configurés pour coopérer par paires, dans la direction de la largeur, ou conjointement pour fournir le niveau d'huile prédéterminé.

6. Friteuse multizone selon la revendication 4 ou la revendication 5, dans laquelle les capteurs de niveau d'huile et les vannes d'entrée et de sortie correspondantes sont configurés pour fournir le niveau d'huile dans la cuve au moins à la hauteur du produit particulier sur la bande transporteuse, lorsque le produit est déplacé à travers chaque zone de cuisson le long d'une partie principale horizontale (130) de l'étendue pour obtenir une friture profonde uniforme de tout le produit.

7. Friteuse multizone selon l'une quelconque des revendications précédentes 1 à 6, dans laquelle chaque zone de cuisson comprend une entrée d'huile (150, 160), une sortie d'huile (155, 165), comportant une partie intermédiaire de la cuve de cuisson (105) s'étendant entre ladite entrée d'huile et ladite sortie d'huile (155, 165).

8. Friteuse multizone selon la revendication 7, dans laquelle les zones de cuisson (140, 145) sont en communication fluidique, un premier capteur de niveau d'huile (170) étant disposé au début de la première zone de cuisson (140) après une première entrée d'huile (150), et à proximité de cette dernière, dans ledit sens, un deuxième capteur de niveau d'huile (175) étant disposé à la fin de la première zone de cuisson (140) avant une première sortie d'huile (155), un troisième capteur de niveau d'huile (180) étant disposé au début de la seconde zone de cuisson (145) après une seconde entrée d'huile (160), et à proximité de cette dernière, et un quatrième capteur de niveau d'huile (181) étant disposé à la fin de la seconde zone de cuisson (145) et avant une seconde sortie d'huile (165), chaque entrée d'huile (150, 160) est raccordée à un circuit d'entrée d'huile (182) par le biais d'une vanne de commande d'entrée d'huile (184, 184a) et chaque sortie d'huile (155, 65) est raccordée à un circuit de sortie d'huile (183) par le biais d'une vanne de commande de sortie d'huile (185, 185a),
dans laquelle le premier capteur de niveau d'huile (170) est configuré pour détecter le niveau d'huile de l'huile de cuisson dans la cuve (105) à proximité de la première entrée d'huile (150) et, au moyen du dispositif de contrôle du processus de cuisson (700), pour commander la première vanne de commande d'entrée d'huile (184) de façon à réguler l'écoulement d'huile du circuit d'entrée d'huile (182) dans la cuve (105), le deuxième capteur de niveau d'huile (175) est configuré pour détecter le niveau d'huile à proximité de la première sortie d'huile (155) et, au moyen du dispositif de contrôle du processus de cuisson (700), pour commander la première vanne de commande de sortie d'huile (185) de façon à contrôler l'écoulement d'huile de la cuve (105) à travers la première sortie d'huile (155) vers le circuit de sortie d'huile (183), et
le troisième capteur de niveau d'huile (180) est configuré pour détecter le niveau d'huile de l'huile de cuisson dans la cuve (105) à proximité de la seconde entrée d'huile (155) et, au moyen du dispositif de contrôle du processus de cuisson (700), pour commander la seconde vanne de commande d'entrée d'huile (184a) de façon à réguler l'écoulement d'huile du circuit d'entrée d'huile (182) dans la cuve (105), le quatrième capteur de niveau d'huile (181) est configuré pour détecter le niveau d'huile à proximité de la seconde sortie d'huile (165) et, au moyen du dispositif de contrôle du processus de cuisson (700), pour commander la seconde vanne de commande de sortie d'huile (185a) de façon à contrôler l'écoulement d'huile de la cuve (105) à travers la seconde sortie d'huile (165) vers le circuit de sortie d'huile (183) jusqu'à l'obtention du niveau d'huile de cuisson prédéterminé dans la cuve (105).

9. Friteuse multizone selon la revendication 7, dans laquelle l'entrée d'huile (150) comprend une cuve d'entrée (190) s'étendant latéralement sur la largeur du fond (121) de la cuve de cuisson (105), dans laquelle la section de la cuve d'entrée est rectangulaire, une plaque d'angle (192) faisant face à un coin inférieur (193) formant une première chambre (195) dans l'extrémité éloignée de la cuve d'entrée (190), et une chambre principale (196), dans laquelle la partie supérieure de la plaque d'angle (192) comporte une pluralité de trous (197) fournissant une communication fluidique du circuit d'entrée d'huile (182) dans la chambre principale (196) de la cuve d'entrée (190), une plaque inclinée (198) disposée dans la chambre principale (196) s'étendant diagonalement de la partie inférieure (199) à une plaque de sortie perforée (200) de la chambre principale (196) formant des première et seconde chambres secondaires (196a, 196b), dans laquelle la plaque inclinée (198) s'étend sur la largeur de la cuve d'entrée (190) avec un espace (201) le long du fond (199) formant une communication fluidique entre les chambres secondaires (196a, 196b), et la plaque de sortie perforée (200) est dotée d'un motif de trous en forme de lèvres conçus pour amener l'huile de cuisson dans la cuve dans le même sens que le déplacement des produits alimentaires sur le transporteur.

10. Friteuse multizone selon l'une quelconque des revendications précédentes, comprenant une pompe de circulation (107) configurée pour pomper l'huile de cuisson dans la cuve de façon à amener une vitesse d'écoulement d'huile de cuisson individuellement dans chaque zone à être égal ou sensiblement égal à la vitesse de la bande transporteuse afin d'empêcher une turbulence.

11. Friteuse multizone selon l'une quelconque des revendications précédentes, dans laquelle le dispositif de contrôle du processus de cuisson (700) est configuré pour commander le fonctionnement de la friteuse multizone (100).

12. Friteuse multizone selon la revendication 11, dans laquelle le dispositif de contrôle du processus (700) est connecté de manière fonctionnelle à des signaux d'entrée provenant des capteurs de niveau d'huile (170, 175, 180, 181) et est configuré pour les recevoir et pour commander le fonctionnement des vannes d'entrée et de sortie d'huile (184, 185, 184a, 185a) et le système de circulation d'huile comprenant le circuit d'entrée d'huile (182) et un circuit de sortie d'huile (183), de façon à maintenir le niveau d'huile prédéterminé dans la cuve (105).

13. Procédé de préparation de denrées alimentaires frites dans une friteuse multizone selon l'une quelconque des revendications précédentes 2 à 12, comprenant les étapes :
déposer (300) des produits alimentaires (187) sur le convoyeur (110) afin de les transporter à travers l'huile de cuisson chauffée pour les frire, dans lequel le niveau d'huile de cuisson monte en raison du volume d'huile déplacé du produit ;
détecter (305a) la montée du niveau d'huile par le premier capteur de niveau d'huile (170) dans la première zone de cuisson (140) ;
commander (310a) la première vanne de commande d'entrée d'huile (184) pour réguler l'écoulement d'huile du circuit d'entrée d'huile (182) dans la cuve (105) à travers la première entrée d'huile (150), de façon à le réduire, en réponse au niveau d'huile de cuisson détecté ;
détecter (305b) la montée du niveau d'huile par le deuxième capteur de niveau d'huile (175) ;
commander (310b) la première vanne de commande de sortie (185) pour réguler l'écoulement d'huile de la cuve (105) à travers la première sortie (155) ;
détecter (305c) le niveau d'huile par le troisième capteur de niveau d'huile (180) dans la seconde zone de cuisson (145) ;
commander (310c) l'autre vanne de commande d'entrée d'huile (184a) pour réguler l'écoulement d'huile du circuit d'entrée d'huile (182) dans la cuve (105) à travers la seconde entrée d'huile (160), en réponse au niveau d'huile détecté ;
détecter (305d) le niveau d'huile par le quatrième capteur de niveau d'huile (181) ;
commander (310d) l'autre vanne de commande de sortie (185a) pour réguler l'écoulement d'huile de la cuve (105) à travers la seconde sortie (165) de façon à garantir le maintien d'un niveau d'huile prédéterminé dans la cuve.

14. Procédé selon la revendication 13, dans lequel le niveau d'huile prédéterminé dans la cuve est régulé pour être à un niveau compris entre 5 et 100 mm.

15. Procédé selon la revendication 13 ou la revendication 14, dans lequel le niveau d'huile prédéterminé dans la cuve est régulé pour être à un niveau compris entre 10 et 35 m.

16. Programme informatique comprenant des instructions de programme ayant pour objet d'amener un dispositif de contrôle du processus de cuisson (700) ayant une capacité informatique à mettre en œuvre un procédé de préparation de denrées alimentaires frites dans une friteuse multizone selon l'une quelconque des revendications 2 à 12, lorsque ledit programme est exécuté sur ledit dispositif de contrôle du processus de cuisson, le procédé comprenant les étapes :
détecter (305a) la montée du niveau d'huile par une réception d'un signal d'entrée en provenance du premier capteur de niveau d'huile (170) dans la première zone de cuisson (140) ;
commander (310a) la première vanne de commande d'entrée d'huile (184) pour réguler l'écoulement d'huile du circuit d'entrée d'huile (182) dans la cuve (105) à travers la première entrée d'huile (150), de façon à le réduire en réponse au niveau d'huile de cuisson détecté ;
détecter (305b) la montée du niveau d'huile par une réception d'un signal d'entrée en provenance du deuxième capteur de niveau d'huile (175) ;
commander (310b) la première vanne de commande de sortie (185) pour réguler l'écoulement d'huile de la cuve (105) à travers la première sortie (155) ;
détecter (305c) le niveau d'huile par une réception d'un signal d'entrée en provenance du troisième capteur de niveau d'huile (180) dans la seconde zone de cuisson (145) ;
commander (310c) l'autre vanne de commande d'entrée d'huile (184a) pour réguler l'écoulement d'huile du circuit d'entrée d'huile (182) dans la cuve (105) à travers la seconde entrée d'huile (160) en réponse au niveau d'huile détecté ;
détecter (305d) le niveau d'huile par une réception d'un signal d'entrée en provenance du quatrième capteur de niveau d'huile (181) ;
commander (310d) l'autre vanne de commande de sortie (185a) pour réguler l'écoulement d'huile de la cuve (105) à travers la seconde sortie (165) de façon à garantir le maintien d'un niveau d'huile prédéterminé dans la cuve.

17. Programme informatique selon la revendication 16 sur un support.

18. Programme informatique selon la revendication 17, dans lequel ledit support est un support d'enregistrement, une mémoire informatique, une mémoire à lecture seule, un support lisible par ordinateur ou un signal électrique porteur.
